# EUROPEAN PATENT APPLICATION

(11) **EP 4 835 428 A1**
(43) Date of publication of application: **04.11.2026**
(21) Application number: 25197635.3
(22) Date of filing: 22.08.2025
(51) Int. Cl.: G01M 5/00, G01M 7/06

(54) **FATIGUE TESTING METHOD AND APPARATUS FOR WIND TURBINE BLADE, DEVICE AND STORAGE MEDIUM**

(30) Priority: 30.04.2025 CN 202510564359
(71) Applicant: Sany Renewable Energy Co., Ltd., Beijing 102206 (CN)
(72) Inventor: JIA, Panfeng, Beijing, 102206, (CN); HE, Hanlu, Beijing, 102206 (CN); DAI, Jun, Beijing, 102206 (CN)
(74) Representative: Elzaburu S.L.P.

(57) **Abstract**

The present application discloses a fatigue testing method and apparatus for a wind turbine blade, a device and a storage medium, which relates to the field of material testing technologies, the method includes: acquiring a target operating trajectory of a wind turbine blade under test; determining an excitation force at a joint of a linkage mechanism and the wind turbine blade under test according to the target operating trajectory; determining an output torque of a drive motor according to the excitation force, and controlling the drive motor to execute the output torque, so as to drive the linkage mechanism to oscillate the wind turbine blade under test according to the target operating trajectory. In the present application, through associating the operating trajectory of the blade with an excitation force of the device and the output torque of the motor, and by performing step-by-step conversion, it ensures a fatigue test of the wind turbine blade can be carried out according to an established trajectory, which effectively improves the adaptability of a five-link fatigue testing device and the accuracy of the test results.

## Description

### TECHNICAL FIELD

The present application relates to the field of material testing technologies and, in particular, to a fatigue testing method and apparatus for a wind turbine blade, a device and a storage medium.

### TECHNICAL BACKGROUND

With the continuous increase of blade performance requirements in the wind power industry, blades of wind turbines are rapidly developing toward larger-scale designs. Against this backdrop, a five-link fatigue testing device fixed on the ground, with its outstanding excitation capabilities and comprehensive functional configuration, is expected to gradually emerge as a mainstream solution approach for the field of large-scale blade testing in the future.

However, the current application of this device remains in its nascent stage with relatively limited practical operational experience. In terms of operation control logic, a drive motor within the device frequently fails to drive a wind turbine blade to rock with required patterns and force magnitudes, so that the movement of the blade cannot strictly follow a target operating trajectory of a fatigue testing task, or a fatigue test can be only carried out according to a simple operating trajectory, thus it is difficult to accurately adapt to testing requirements of large-scale blades with different specifications, and it is difficult to ensure the stability of test processes and the reliability of test results. To a great extent, it limits the full performance of the five-link fatigue testing device in a large-scale blade testing, which is urgent for professionals in related fields to perform further study, optimization and improvement, so as to promote the five-link fatigue testing device to better serve the development of wind power industry.

### SUMMARY

A main purpose of the present application is to provide a fatigue testing method and apparatus for a wind turbine blade, a device and a storage medium, aiming at solving a technical problem of how to improve the efficiency of a five-link fatigue testing device in a blade fatigue testing.

In order to achieve the above purpose, the present application provides a fatigue testing method for a wind turbine blade, applied to a fatigue testing device for a wind turbine blade, where the fatigue testing device for a wind turbine blade includes a linkage mechanism and a drive motor connected with one end of the linkage mechanism, and the other end of the linkage mechanism is connected with a wind turbine blade under test. The fatigue testing method for a wind turbine blade includes:
acquiring a target operating trajectory of the wind turbine blade under test;
determining an excitation force at a joint of the linkage mechanism and the wind turbine blade under test according to the target operating trajectory;
determining an output torque of the drive motor according to the excitation force, and controlling the drive motor to execute the output torque, so as to drive the linkage mechanism to oscillate the wind turbine blade under test according to the target operating trajectory.

In an embodiment, the other end of the linkage mechanism is connected with a blade clamp through a bearing, and the blade clamp is used to clamp the wind turbine blade under test; the target operating trajectory includes a displacement and a rotation angle of the wind turbine blade under test, and the excitation force includes a horizontal component and a vertical component;
the step of determining the excitation force at the joint of the linkage mechanism and the wind turbine blade under test according to the target operating trajectory includes:
determining the horizontal component and the vertical component at the joint of the linkage mechanism and the blade clamp according to the displacement, the rotation angle and a preset first relation matrix, where the first relation matrix is used to establish arithmetic relations between the displacement and the rotation angle, and the horizontal component and the vertical component.

In an embodiment, before the step of determining the horizontal component and the vertical component at the joint of the linkage mechanism and the blade clamp according to the displacement, the rotation angle and the preset first relation matrix, the method further includes:
acquiring an elastic modulus of the wind turbine blade under test, and a section moment of inertia, a section area and a section location of the wind turbine blade under test at a section, where the section is located at a location where the wind turbine blade under test is clamped by the blade clamp, and the section location is a length from the section to a fixed location of the wind turbine blade under test;
constructing the first relation matrix according to the elastic modulus, the section moment of inertia, the section area and the section location.

In an embodiment, the excitation force includes a horizontal component and a vertical component, the drive motor includes a first drive motor and a second drive motor, and the output torque includes a first output torque of the first drive motor and a second output torque of the second drive motor, and the step of determining the output torque of the drive motor according to the excitation force includes:
determining the first output torque and the second output torque according to the horizontal component, the vertical component and a preset second relation matrix, where the second relation matrix is used to establish arithmetic relations between the horizontal component and the vertical component, and the first output torque and the second output torque.

In an embodiment, the linkage mechanism includes a first excitation rocker arm, a second excitation rocker arm, a first transmission rod and a second transmission rod, where one end of the first excitation rocker arm is connected with the first drive motor, and the other end of the first excitation rocker arm is connected with a blade clamp through a bearing, and the blade clamp is used to clamp the wind turbine blade under test, one end of the second excitation rocker arm is connected with the second drive motor, and the other end of the second excitation rocker arm is connected with the blade clamp through a bearing;
before the step of determining the first output torque and the second output torque according to the horizontal component, the vertical component and the preset second relation matrix, the method further includes:
acquiring a first length, a second length, a third length, a fourth length, a fifth length, a first included angle and a second included angle, where the first length is a distance from a joint of the first drive motor and the first excitation rocker arm to a joint of the first excitation rocker arm and the first transmission rod; the second length is a distance from the joint of the first excitation rocker arm and the first transmission rod to the bottom of the blade clamp; the third length is a distance from a joint of the second excitation rocker arm and the second transmission rod to the bottom of the blade clamp; the fourth length is a distance from a joint of the second drive motor and the second excitation rocker arm to the joint of the second excitation rocker arm and the second transmission rod; the five length is a distance from the joint of the first drive motor and the first excitation rocker arm to the joint of the second excitation rocker arm and the second transmission rod; the first included angle is an included angle between the first excitation rocker arm and a preset horizontal direction; the second included angle is an included angle between the second excitation rocker arm and the horizontal direction;
constructing the second relation matrix according to the first length, the second length, the third length, the fourth length, the fifth length, the first included angle and the second included angle.

In an embodiment, the step of constructing the second relation matrix according to the first length, the second length, the third length, the fourth length, the fifth length, the first included angle and the second included angle includes:
constructing a first function and a second function according to the first length, the second length, the third length, the fourth length, the fifth length, the first included angle and the second included angle, respectively;
computing complete differentials of the first function and the second function respectively to obtain respective differential elements, and constructing a candidate relation matrix based on the respective differential elements;
transposing the candidate relation matrix to obtain the second relation matrix.

In an embodiment, the linkage mechanism is equipped with an angle measuring component, and after the step of controlling the drive motor to execute the output torque, so as to drive the linkage mechanism to oscillate the wind turbine blade under test according to the target operating trajectory, the method further includes:
monitoring a real-time operating trajectory of the wind turbine blade under test according to the angle measuring component, and comparing the real-time operating trajectory with the target operating trajectory;
in the case that the real-time operating trajectory does not match the target operating trajectory, adjusting the output torque according to the real-time operating trajectory.

In addition, in order to achieve the above purpose, the present application also provides a fatigue testing apparatus for a wind turbine blade, applied to a fatigue testing device for a wind turbine blade, where the fatigue testing device for a wind turbine blade includes a linkage mechanism and a drive motor that drives the movement of the linkage mechanism, and the fatigue testing apparatus for a wind turbine blade includes:
a target acquiring module, configured to acquire a target operating trajectory of a wind turbine blade under test from a fatigue testing task of the wind turbine blade under test, where the wind turbine blade under test is connected with a top end of the linkage mechanism;
a first determining module, configured to determine an excitation force at a top end of the linkage mechanism according to the target operating trajectory;
a second determining module, configured to determine an output torque of the drive motor according to the excitation force, and control the drive motor to execute the output torque, so as to drive the linkage mechanism to oscillate the wind turbine blade under test.

In addition, in order to achieve the above purpose, the present application also provides an electronic device, the device includes a memory, a processor and a computer program stored in the memory and run in the processor, and the computer program is configured to implement steps of the fatigue testing method for a wind turbine blade as described above.

In addition, in order to achieve the above purpose, the present application also provides a storage medium, and the storage medium is a computer-readable storage medium, and the storage medium stores a computer program which, when executed by a processor, implements steps of the fatigue testing method for a wind turbine blade as described above.

In addition, in order to achieve the above purpose, the present application also provides a computer program product, which includes a computer program which, when executed by a processor, implements steps of the fatigue testing method for a wind turbine blade as described above.

The one or more technical schemes provided in the present application have at least the following technical effects:
in the present application, firstly, a target operating trajectory of a wind turbine blade under test is acquired in a fatigue testing task of the wind turbine blade under test, so as to obtain the ideal movement situation of the wind turbine blade under test in the fatigue test process, which provides an accurate basis and direction for subsequent operations such as determining an excitation force and a motor output torque, and ensure that the whole test process is carried out based on the target operating trajectory meeting testing requirements. Then, according to the target operating trajectory, the excitation force at a top end of a linkage mechanism of a fatigue testing device for a wind turbine blade is determined, and the excitation force which is applied at the top end and makes the blade move according to the target operating trajectory are calculated by analyzing the target operating trajectory of the blade, relations between blade movement and stress on the blade are established, and kinematic requirements of the blade is converted into mechanical indicators, which provides key intermediate parameters for the subsequent accurate control of the motor output torque, helps to implement the accurate loading of the blade fatigue testing, improves the accuracy and reliability of test results, and ensures that the load borne by the blade in the test is consistent with the actual operating conditions. Finally, an output torque of a drive motor in the fatigue testing device for a wind turbine blade is determined according to the excitation force, and the drive motor is controlled to execute the output torque, so as to drive the linkage mechanism to oscillate the wind turbine blade under test, so that abstract excitation force requirements are converted into executable specific output torque instructions of the motor, therefore, the precise driving control of the linkage mechanism and the wind turbine blade is implemented, and the motor is ensured to drive the blade to oscillate with a required pattern and a force magnitude. That is, the movement of the blade is enabled to strictly follow the target operating trajectory, which ensures the stability of the fatigue test processes and the validity of test results, thereby effectively solving the problem of how to accurately implement mechanical requirements of the blade through the device, and improving the applicability and efficiency of the five-link fatigue testing device in wind turbine blade testing.

To sum up, in the present application, through associating the operating trajectory of the blade with an excitation force of the device and the output a torque of the motor, and by performing step-by-step conversion, it avoids the technical problems that it is difficult for a traditional testing device to accurately adapt to testing requirements of large-scale blades with different specifications, and that it is difficult to ensure the stability and reliability of test processes, etc. By this method, the excitation force can be accurately determined through the target operating trajectory, and then the output torque of the drive motor can be accurately controlled, so that the fatigue test of the wind turbine blade can be carried out according to the established trajectory, which effectively improves the adaptability of the five-link fatigue testing device and the accuracy of test results, promotes the development and application of the device in the field of large-scale wind turbine blade testing, and provides strong technical support for the progress of the wind power industry.

### BRIEF DESCRIPTION OF THE DRAWINGS

The accompanying drawings, which are incorporated in and constitute a part of this description, illustrate embodiments consistent with the present application and serve to explain principles of the present application together with the description.

In order to explain technical scheme in embodiments of the present application or the prior art more clearly, the accompanying drawings needed in the description of the embodiments or the prior art will be briefly introduced below. It is evident that, for those of ordinary skill in the art, other accompanying drawings can be obtained according to these accompanying drawings without creative effort.
FIG. 1 is a schematic flow chart provided by Embodiment 1 of a fatigue testing method for a wind turbine blade of the present application.
FIG. 2 is a schematic scene diagram of a fatigue testing method for a wind turbine blade provided in the Embodiment 1 of the present application.
FIG. 3 is a schematic flow chart provided by Embodiment 2 of a fatigue testing method for a wind turbine blade of the present application.
FIG. 4 is a schematic diagram showing a modular structure of a fatigue testing apparatus for a wind turbine blade according to an embodiment of the present application.
FIG. 5 is a schematic structural diagram of a device corresponding to a hardware operation environment involved in a fatigue testing method for a wind turbine blade in an embodiment of the present application.

The implementation of the objective, functional features and advantage of the present application will be further illustrated with reference to the accompanying drawings in combination with embodiments.

### DESCRIPTION OF EMBODIMENTS

It should be understood that specific embodiments described herein are only used to explain technical schemes of the present application and are not used to limit the present application.

In order to better understand technical schemes of the present application, the following will be described in detail with accompanying drawings and specific implementations.

A main solution of an embodiment of the present application is as follows: acquiring a target operating trajectory of a wind turbine blade under test; determining an excitation force at a joint of a linkage mechanism in a fatigue testing device for a wind turbine blade and the wind turbine blade under test according to the target operating trajectory; and determining an output torque of a drive motor in the fatigue testing device for a wind turbine blade according to the excitation force, and controlling the drive motor to execute the output torque, so as to drive the linkage mechanism to oscillate the wind turbine blade under test according to the target operating trajectory.

The current application of the five-link fatigue testing device remains in its nascent stage with relatively limited practical operational experience. In terms of operation control logic, a drive motor within the device frequently fails to drive a wind turbine blade to rock with required patterns and force magnitudes, so that the movement of the blade cannot strictly follow a target operating trajectory of a fatigue testing task, or a fatigue test can only be carried out according to a simple operating trajectory, thus it is difficult to accurately adapt to testing requirements of large-scale blades with different specifications, and it is difficult to ensure the stability and reliability of test processes. To a great extent, it limits the full performance of the five-link fatigue testing device in a large-scale blade testing, which is urgent for professionals in related fields to perform further study, optimization and improvement, so as to promote the five-link fatigue testing device to better serve the development of wind power industry

The present application provides a solution, where through associating the operating trajectory of the blade with an excitation force of the device and the output a torque of the motor, and by performing step-by-step conversion, it avoids the technical problems that it is difficult for a traditional testing device to accurately adapt to testing requirements of large-scale blades with different specifications, and that it is difficult to ensure the stability and reliability of test processes, etc. By this method, the excitation force can be accurately determined through the target operating trajectory, and then the output torque of the drive motor can be accurately controlled, so that the fatigue test of the wind turbine blade can be carried out according to the established trajectory, which effectively improves the adaptability of the five-link fatigue testing device and the accuracy of the test results, promotes the development and application of the device in the field of large-scale wind turbine blade testing, and provides strong technical support for the progress of the wind power industry.

It should be noted that an executive subject of this embodiment can be a computing service device with functions of data processing, network communication and program running, such as a tablet computer, a personal computer, a mobile phone and the like, or an electronic device that can implement the above functions. Taking an electronic device as an example, this embodiment and the following embodiments will be described below.

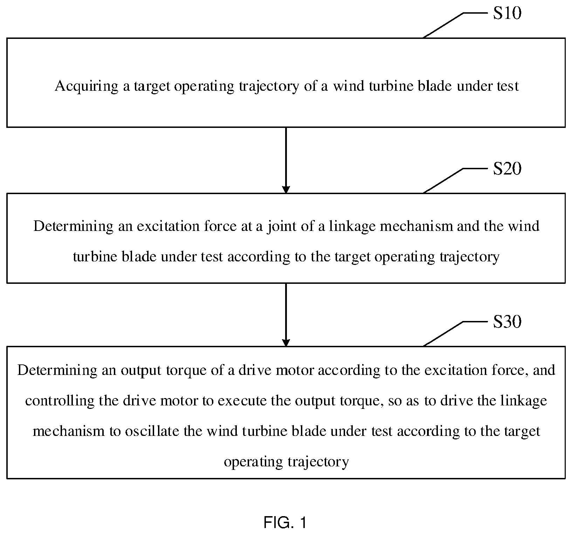

Based on this, an embodiment of the present application provides a fatigue testing method for a wind turbine blade, with reference to FIG. 1, which is a schematic flow chart of Embodiment 1 of a fatigue testing method for a wind turbine blade of the present application.

In this embodiment, the fatigue testing method for a wind turbine blade is applied to a fatigue testing device for a wind turbine blade, and the fatigue testing device for a wind turbine blade includes a linkage mechanism and a drive motor connected with one end of the linkage mechanism, and the other end of the linkage mechanism is connected with a wind turbine blade under test, and the fatigue testing method for a wind turbine blade includes steps S10 to S30.

S10, acquiring a target operating trajectory of a wind turbine blade under test.

It should be noted that the target operating trajectory refers to movement parameters such as a displacement and a rotation angle that a wind turbine blade should achieve in a fatigue test.

Understandably, since it is necessary to know a movement state that the blade should reach in the test, step S10 can avoid the inaccuracy and waste of resources caused by blind testing, thus providing accurate basis for the subsequent calculation of an excitation force and an output torque.

Exemplarily, design specifications and actual operating conditions of the wind turbine blade can be deeply analyzed first to clarify the load and movement requirements that the wind turbine blade should bear in the fatigue test. Then, the target operating trajectory data corresponding to the wind turbine blade under test is retrieved from a pre-established fatigue testing task file, where the data is usually stored in the form of parameters such as the displacement and the rotation angle of the blade during the test. For example, for a large-scale wind turbine blade, the target operating trajectory may include detailed information, such as a horizontal displacement (for example, the horizontal displacement varies within ±2 meters during the test period), a vertical displacement (for example, it varies within ±1.5 meters) and a rotation angle around a blade root (for example, it varies within ±10 degrees) of a blade tip at different time points under a specific wind speed and a wind direction condition. By reading the data, a precise kinematic basis is provided for subsequent operations such as determining the excitation force.

S20, determining an excitation force at a joint of a linkage mechanism and the wind turbine blade under test according to the target operating trajectory.

It should be noted that the excitation force refers to the force exerted at the top end of the linkage mechanism so as to make the blade move according to the target operating trajectory.

Understandably, it is difficult for the current five-link fatigue testing device to effectively establish the relation between a motor output torque and a blade operating trajectory, causing limitation on the full effectiveness of the five-link fatigue testing device in the large-scale blade testing. Therefore, step S20 is performed, and the excitation force required to make the blade move according to the trajectory and exerted at a joint of the linkage mechanism and the wind turbine blade under test is calculated by analyzing the target operating trajectory of the blade. The association between the blade movement and the force is established, and the kinematic requirements of the blade are converted into mechanical indicator, which avoids the deviation of test results caused by the inability to accurately determine the force on the blade, realizes the establishment of the relation between the blade movement and the force, provides key intermediate parameters for the subsequent accurate control of the motor output torque, helps to implement the accurate loading of the blade fatigue testing, improves the accuracy and reliability of test results, and ensures that the load borne by the blade in the test is consistent with the actual operating condition.

Exemplarily, based on the acquired target operating trajectory, the excitation force is determined by using the principles of kinematics and dynamics in classical mechanics. For example, for the displacement and rotation angle variation at the top end of the blade in the target operating trajectory, a finite element analysis software can be used to establish a mechanical model of the wind turbine blade, the target operating trajectory data is inputted and a horizontal excitation force and a vertical excitation force required at the top end of the blade at each moment is calculated through numerical simulation.

In a feasible implementation, the other end of the linkage mechanism is connected with a blade clamp through a bearing, and the blade clamp is configured to clamp the wind turbine blade under test, the target operating trajectory includes the displacement and the rotation angle of the wind turbine blade under test, and the excitation force includes a horizontal component and a vertical component.

Step S20 may further include step S21:
S21, determining a horizontal component and a vertical component at a joint of the linkage mechanism and the blade clamp according to the displacement, the rotation angle and a preset first relation matrix, where the first relation matrix is used to establish arithmetic relations between the displacement and the rotation angle, and the horizontal component and the vertical component.

It should be noted that the first relation matrix refers to a mathematical matrix. Based on physical characteristics and mechanical principles of the blade, this matrix establishes a quantitative relation between the displacement, the rotation angle and the excitation force of the blade, which is used to convert the displacement and the rotation angle into corresponding horizontal and vertical excitation forces through matrix operations.

Understandably, since the kinematic parameters (a displacement and a rotation angle) of the blade need to be converted into mechanical parameters (horizontal and vertical excitation forces), the step S21 is performed, the technical problems such as the inaccuracy and deviation of test results caused by estimating the force on the blade only based on experience or simplifying assumptions can be avoided, and the movement requirements of the blade can be accurately converted into specific force indicators, thus improving the accuracy and reliability of determining the excitation force and ensuring that the subsequent motor control can accurately meet testing requirements of the blade.

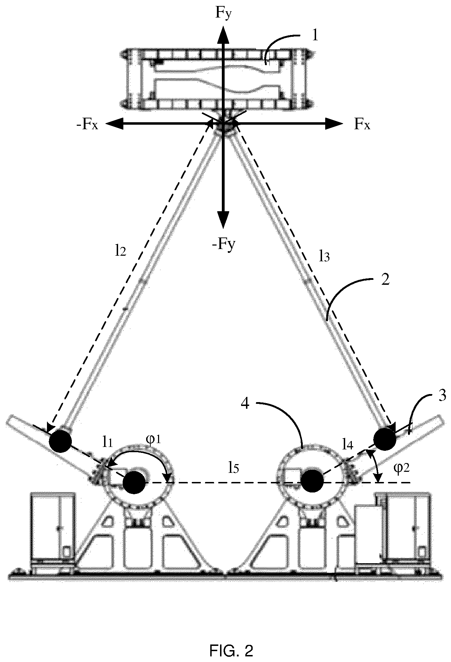

Exemplarily, the horizontal component *Fₓ* and the vertical component *F_{y}* can be referred to in FIG. 2. The horizontal component *Fₓ* and the vertical component *F_{y}* at the top end of the linkage mechanism are calculated according to the displacement *dₓ, d_{y}, d_{z},* and rotation angle *θₓ, θ_{y}, θ_{z}* of the wind turbine blade under test and the preset first relation matrix *K*_{2*6}: $\left(\begin{matrix}{F}_{x} \\ {F}_{y}\end{matrix}\right) = {K}_{2 ∗ 6} \left(\begin{matrix}{d}_{x} \\ {d}_{y} \\ {d}_{z} \\ {θ}_{x} \\ {θ}_{{y}_{}} \\ {θ}_{z}\end{matrix}\right)$ where *dₓ, d_{y}, d_{z}* are displacements of the wind turbine blade under test in the x, y and z axes, respectively, and *θₓ, θ_{y}, θ_{z}* are included angles of the wind turbine blade under test with the x, y and z axes, respectively.

In this implementation, a preset mathematical relation matrix is adopted to associate the kinematic parameters such as the displacement and the rotation angle of the blade with the horizontal and vertical excitation forces, which avoids the problems of inaccurate testing and poor reliability caused by the difficulty in accurately converting kinematic parameters into mechanical parameters in traditional methods, and achieves technical effects that movement requirements of the blade is precisely converted into specific force indicators, to improve the accuracy and reliability of determining the excitation force, ensure that subsequent motor control can accurately meet testing requirements of the blades, and make testing processes more stable and test results more accurate.

In a feasible implementation, before step S21, steps S021~S022 are further included.

Step S021, acquiring an elastic modulus of the wind turbine blade under test, and a section moment of inertia, a section area, and a section location of the wind turbine blade under test at a section, where the section is located at a location where the wind turbine blade under test is clamped by the blade clamp, and the section location is a length from the section to a fixed location of the wind turbine blade under test.

It should be noted that the elastic modulus is a mechanical performance indicator of the wind turbine blade, which indicates a ratio of stress to strain in the elastic deformation stage of materials, reflects the ability of materials to resist elastic deformation, and determines the degree of elastic deformation of the blade when it is stressed. The section moment of inertia is a geometric parameter that measures the ability of the section to resist bending deformation, where the parameter is related to the shape and size of the section and reflects the ability of the section of the blade to resist bending under bending moment. The section area refers to area of a section of the wind turbine blade, the value of which reflects the size of the section of the blade. The section location refers to a distance from the section being clamped to the fixed location of the blade.

Understandably, it is necessary to acquire key physical parameters of the wind turbine blade, where these parameters are the basis of constructing the first relation matrix, which can accurately reflect mechanical characteristics of the blade, so as to provides accurate data support for determining the excitation force. Therefore, step S021 is performed, it can avoid the problem of inaccurate construction of the first relation matrix due to the lack of physical parameters of the blade, which in turn affects the calculation accuracy of the excitation force, thereby providing a reliable data basis for constructing an accurate first relation matrix and ensuring the accuracy and reliability of the subsequent calculation of the excitation force.

Step S022, constructing the first relation matrix according to the elastic modulus, the section moment of inertia, the section area and the section location.

Understandably, it is necessary to establish the quantitative relation between the kinematic parameters (a displacement and a rotation angle) of the blade and the mechanical parameters (a horizontal component and a vertical component), so as to accurately calculate the excitation force. Therefore, step S022 is performed, it can avoid the problem that the calculation of the excitation force is inaccurate due to the fact that the physical characteristics of the blade are not considered, which in turn affects the reliability of test results. Therefore, the physical characteristics of the blade are combined with the kinematic parameters to construct the first relation matrix which can accurately reflect the force on the blade, the accuracy of the calculation of the excitation force can be improved, and reliable basis for subsequent motor control is provided.

Exemplarily, the first relation matrix *K*_{2*6} is constructed according to the elastic modulus E, the section moment of inertia I, the section area A and the section location I: ${K}_{2 ∗ 6} = \left(\begin{matrix}\frac{EA}{l} & 0 & 0 & - \frac{EA}{l} & 0 & 0 \\ 0 & \frac{12 EI}{{l}^{3}} & \frac{6 EI}{{l}^{2}} & 0 & - \frac{12 EI}{{l}^{3}} & \frac{6 EI}{{l}^{2}}\end{matrix}\right)$

It can be understood that the first relation matrix *K*_{2*6} can be a part of the stiffness matrix K in the Euler-Bernoulli beam model, where the stiffness matrix K is: $K = \left(\begin{matrix}\frac{EA}{l} & 0 & 0 & - \frac{EA}{l} & 0 & 0 \\ 0 & \frac{12 EI}{{l}^{3}} & \frac{6 EI}{{l}^{2}} & 0 & - \frac{12 EI}{{l}^{3}} & \frac{6 EI}{{l}^{2}} \\ 0 & \frac{6 EI}{{l}^{2}} & \frac{4 EI}{l} & 0 & \frac{6 EI}{{l}^{2}} & \frac{2 EI}{l} \\ - \frac{EA}{l} & 0 & 0 & \frac{EA}{l} & 0 & 0 \\ 0 & - \frac{12 EI}{{l}^{3}} & - \frac{6 EI}{{l}^{2}} & 0 & \frac{12 EI}{{l}^{3}} & - \frac{6 EI}{{l}^{2}} \\ 0 & \frac{6 EI}{{l}^{2}} & \frac{2 EI}{l} & 0 & - \frac{6 EI}{{l}^{2}} & \frac{4 EI}{l}\end{matrix}\right)$

Since the remaining elements in K except those used in K_{2*6} only establish the relation between the z-axis component of the excitation force and bending moment generated by the excitation force, and the displacement *dₓ, d_{y}, d_{z}* and the rotation angle *θₓ, θ_{y}, θ_{z}* of the wind turbine blade under test; and the Z-axis component of the excitation force and the bending moment generated by the excitation force have little actual influence on the fatigue test process, which can be ignored; thus, the remaining elements in K are ignored, and only some elements are selected as the first relation matrix *K*_{2*6}.

In this implementation, through acquiring the key physical parameters of the blade and constructing the mathematical relation matrix based on these parameters, it avoids the problems of inaccurate calculation of an excitation force and poor reliability of test results caused by ignoring the difference of physical characteristics of the blade, and it achieves the technical effects of combining the actual physical characteristics of the blade with the kinematic parameters to accurately determine the excitation force and improve the accuracy and reliability of the test.

S30, determining an output torque of a drive motor according to the excitation force, and controlling the drive motor to execute the output torque, so as to drive the linkage mechanism to oscillate the wind turbine blade under test according to the target operating trajectory.

It should be noted that the output torque refers to the torque required by the drive motor to drive the linkage mechanism and blades to move.

Understandably, it is difficult for the current five-link fatigue testing device to effectively establish the relation between a motor output torque and a blade operating trajectory, causing limitation on the full effectiveness of the five-link fatigue testing device in the large-scale blade testing. Therefore, step S30 is performed, and the precise driving control of the linkage mechanism and the wind turbine blade is realized by converting the abstract excitation force requirements into the specific motor executable output torque instructions, so as to ensure that the motor drives the blade to rock with a required pattern and a force magnitude, so that the movement of the blade strictly follows the target operating trajectory, thereby ensuring the stability of the fatigue test process and the effectiveness of test results.

Exemplarily, after the excitation force is determined, the output torque of the drive motor is determined by mathematical modeling and matrix operations according to the mechanical structure and kinematics relation of the five-link fatigue testing device. Then, a calculated output torque value is converted into a motor control signal, such as a pulse width modulation signal, by using a motor drive control system, to accurately control the operation of the drive motor, so that the motor rotates according to a calculated output torque, thereby driving the linkage mechanism to oscillate, prompting the wind turbine blade to carry out fatigue testing according to the target operating trajectory, effectively implementing the accurate conversion from an excitation force to motor control, and ensuring the stability and accuracy of the testing process.

In a feasible implementation, the excitation force includes a horizontal component and a vertical component, the drive motor includes a first drive motor and a second drive motor, and the output torque includes a first output torque of the first drive motor and a second output torque of the second drive motor. The step of determining the output torque of the drive motor according to the excitation force in step S30 may further include step S31:
step S31, determining the first output torque and the second output torque according to the horizontal component, the vertical component and a preset second relation matrix, where the second relation matrix is used to establish arithmetic relations between the horizontal component and the vertical component, and the first output torque and the second output torque.

It should be noted that the second relation matrix refers to a mathematical matrix. Based on the mechanical structure and kinematics model of the device, the matrix establishes a quantitative relation between the horizontal component, the vertical component and the output torque of the drive motor, which is configured to convert the excitation force into the corresponding motor output torque through matrix operations, so as to ensure that the motor can accurately provide the required power, thereby implementing an accurate fatigue test of the blade.

Understandably, since it is necessary to convert the excitation force on the blade into the output torque of the motor to implement accurate control of the motor and ensure that the linkage mechanism can accurately drive the blade to move according to the target operating trajectory, step S31 is performed, it can avoid the problems of inaccurate motor control, deviation of the blade movement trajectory from the target operating trajectory and the like which are caused by the inability to accurately convert the excitation force into the output torque of the motor, so that the mechanical parameter (an excitation force) can be associated with the device control parameter (a motor output torque), and the precise torque control is implemented through a mathematical model to improve the control accuracy and testing efficiency of the testing device.

Exemplarily, firstly, detailed mechanical structure parameters of the five-link fatigue testing device are acquired, including lengths, angles and connection relations of respective components in the linkage mechanism, and then the second relation matrix *J^{T}* is constructed according to these parameters, where the matrix is essentially a mathematical model, and the horizontal component *Fₓ* and the vertical component *F_{y}* are converted into the corresponding motor output torque through matrix operations. In this way, the first output torque *T*₁ that the first drive motor needs to output and the second output torque *T*₂ that the second drive motor needs to output can be accurately calculated: $\left(\begin{matrix}{F}_{x} \\ {F}_{y}\end{matrix}\right) = {J}^{T} \left(\begin{matrix}{T}_{1} \\ {T}_{2}\end{matrix}\right)$ so as to implement accurate control of the motor and ensure that the linkage mechanism can drive the wind turbine blade to carry out a fatigue test according to predetermined movement requirements.

In this implementation, through constructing the mathematical relation matrix, the horizontal and vertical excitation forces on the blades are converted into motor output torques, which avoids the problems of mismatch between a torque output and an actual stress on the blade, low test accuracy and unstable device control caused by the motor being directly controlled, realizes the accurate conversion of mechanical parameters into motor control parameters, improves the control accuracy of the testing device and the reliability of test results, and ensures the fatigue test of the wind turbine blade according to a predetermined trajectory.

In a feasible implementation, the linkage mechanism includes a first excitation rocker arm, a second excitation rocker arm, a first transmission rod and a second transmission rod, where one end of the first excitation rocker arm is connected with the first drive motor, the other end of the first excitation rocker arm is connected with a blade clamp through a bearing, the blade clamp is used to clamp the wind turbine blade under test, one end of the second excitation rocker arm is connected with the second drive motor, and the other end of the second excitation rocker arm is connected with the blade clamp through a bearing.

Before step S31, steps S031~S032 are furthered included.

Step S031, acquiring a first length, a second length, a third length, a fourth length, a fifth length, a first included angle and a second included angle, where the first length is a distance from a joint of the first drive motor and the first excitation rocker arm to a joint of the first excitation rocker arm and the first transmission rod; the second length is a distance from the joint of the first excitation rocker arm and the first transmission rod to the bottom of the blade clamp; the third length is a distance from a joint of the second excitation rocker arm and the second transmission rod to the bottom of the blade clamp; the fourth length is a distance from a joint of the second drive motor and the second excitation rocker arm to the joint of the second excitation rocker arm and the second transmission rod; the five length is a distance from the joint of the first drive motor and the first excitation rocker arm to the joint of the second excitation rocker arm and the second transmission rod; the first included angle is an included angle between the first excitation rocker arm and a preset horizontal direction; the second included angle is an included angle between the second excitation rocker arm and the horizontal direction.

It should be noted that there are many ways to connect the transmission rod and the excitation rocker arm, which can be a bearing link, or the bearing can be replaced with a similar hinged structure.

Exemplarily, with reference to FIG. 2, a fatigue testing device for a wind turbine blade in the figure includes a blade clamp 1, a transmission rod 2, an excitation rocker arm 3 and an electrical drive device 4. A first length *l*₁, a second length *l*₂, a third length *l*₃, a fourth length *l*₄*,* a fifth length *l*₅, a first included angle *φ*₁ and a second included angle *φ*₂ are acquired.

Step S032: constructing the second relation matrix according to the first length, the second length, the third length, the fourth length, the fifth length, the first included angle and the second included angle.

It can be understood that in order to accurately convert the excitation force on the blade into the motor output torque and implement the accurate control of the testing device, step S032 is performed, and it can avoid the problems of inaccurate torque calculation, deviation of the blade testing trajectory from the target operating trajectory, and the influence on the reliability of test results and the stability of the device. Constructing the matrix can accurately reflect the mechanical structure and kinematics relation of the device, implement the accurate conversion of an excitation force to a motor torque, improve the test accuracy and device control stability, and ensure that the blade is tested according to the predetermined trajectory.

In this implementation, thorough accurately measuring mechanical structure parameters of the device and constructing a mathematical matrix by using these parameters, it avoids the problems such as inaccurate calculation of motor output torque and unstable control of blade movement trajectory caused by ignoring structural differences and geometric relations of the device, achieves that the excitation force is accurately converted into the motor output torque, improves the control accuracy of testing device and the reliability of blade fatigue test, and ensures that the testing requirements of blades can be accurately adapted under different device conditions.

This embodiment provides a fatigue testing method for a wind turbine blade, through associating the operating trajectory of the blade with an excitation force of the device and the output a torque of the motor, and by performing step-by-step conversion, it avoids the technical problems that it is difficult for a traditional testing device to accurately adapt to testing requirements of large-scale blades with different specifications, and that it is difficult to ensure the stability and reliability of test processes, etc. By this method, the excitation force can be accurately determined through the target operating trajectory, and then the output torque of the drive motor can be accurately controlled, so that the fatigue test of the wind turbine blade can be carried out according to the established trajectory, which effectively improves the adaptability of the five-link fatigue testing device and the accuracy of the test results, promotes the development and application of the device in the field of large-scale wind turbine blade testing, and provides strong technical support for the progress of the wind power industry.

In a feasible implementation, step S032 may include steps S01 to S03.

Step S01, constructing a first function and a second function according to the first length, the second length, the third length, the fourth length, the fifth length, the first included angle and the second included angle, respectively.

Exemplarily, the first function *f*₁(({*φ*₁, *φ*₂*, l*₁*, l*₂*, l*₂*, l*₃*, l*₄*, l₅*) and the second function *f*₂(*φ*₁, *φ₂, l*₁*, l*₂*, l*₂*, l*₃*, l*₄, *l*₅) are constructed according to the first length *l*₁, the second length *l*₂, the third length *l*₃, the fourth length *l*₄*,* the fifth length *l*₅, the first included angle φ₁ and the second included angle *φ*₂*,* respectively

Step S02, computing complete differentials of the first function and the second function respectively to obtain respective differential elements, and constructing a candidate relation matrix based on the respective differential elements.

Exemplarily, the complete differentials are performed on the first function *f*₁(*φ*₁, *φ*₂*, l*₁*, l*₂*, l*₃*, l*₄*, l*₅) and the second function *f*₂(*φ*₁, *φ*₂, *l*₁*, l*₂*, l₃, l*₃*, l*₄*, l*₅) to obtain respective differential elements, and the candidate relation matrix *J* is constructed based on the differential elements: $J = \left(\begin{matrix}\frac{\partial {f}_{1}}{\partial {φ}_{1}} & \frac{\partial {f}_{1}}{\partial {φ}_{2}} & \frac{\partial {f}_{1}}{\partial {l}_{1}} & \frac{\partial {f}_{1}}{\partial {l}_{2}} & \frac{\partial {f}_{1}}{\partial {l}_{3}} & \frac{\partial {f}_{1}}{\partial {l}_{4}} & \frac{\partial {f}_{1}}{\partial {l}_{5}} \\ \frac{\partial {f}_{2}}{\partial {φ}_{1}} & \frac{\partial {f}_{2}}{\partial {φ}_{2}} & \frac{\partial {f}_{2}}{\partial {l}_{1}} & \frac{\partial {f}_{2}}{\partial {l}_{2}} & \frac{\partial {f}_{2}}{\partial {l}_{3}} & \frac{\partial {f}_{2}}{\partial {l}_{4}} & \frac{\partial {f}_{2}}{\partial {l}_{5}}\end{matrix}\right)$

Step S03: transposing the candidate relation matrix to obtain the second relation matrix.

Exemplarily, *J* is transposed to obtain the second relation matrix *J^{T}*.

In this implementation, through mathematical modeling and differential analysis, it avoids the problem that it is difficult to directly establish a relation between an excitation force and a motor output torque due to the complex structure of the device, and it ensures the applicability and control accuracy of the testing device under different structure parameters. The geometric parameters and the mechanical parameters of the device are accurately associated by functions and matrix operations, which improves the accuracy of motor output torque calculation and the stability of test processes, and ensures the reliability and efficiency of the fatigue testing for the wind turbine blade.

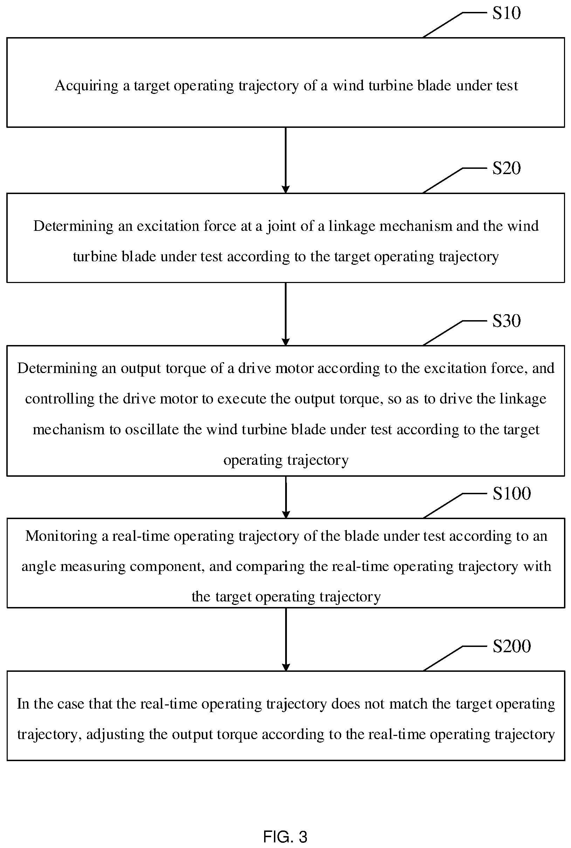

Based on the Embodiment 1 of the present application, the same or similar contents in Embodiment 2 of the present application as the above-mentioned Embodiment 1 can be referred to the above introduction, and will not be repeated in the following. On this basis, with reference to FIG. 3, the linkage mechanism is equipped with an angle measuring component. After step S30, the fatigue testing method for a wind turbine blade further includes steps S100~S200.

S100, monitoring a real-time operating trajectory of the wind turbine blade under test according to an angle measuring component, and comparing the real-time operating trajectory with the target operating trajectory.

It should be noted that the angle measuring component refers to a sensor or a measuring apparatus installed on the linkage mechanism for measuring oscillation angles of blades, such as an encoder, an angle sensor, etc., which can acquire movement angle information of blades in real time. The real-time operating trajectory refers to an actual movement path and location of wind turbine blades during a fatigue test, including movement parameters that vary over times such as displacements, rotation angles of blades.

Understandably, in order to obtain actual movement situations of wind turbine blades during a fatigue test in real time, so as to find the deviation and make adjustment in time, step S100 is performed, and it can avoid problems that the blade operating trajectory deviates from the target operating trajectory due to the lack of real-time monitoring which cannot be found in time, which in turn affects the accuracy and reliability of test results. Therefore, movements of blades are monitored in real time, and it ensures that the movement of blades operates according to a predetermined target operating trajectory, and thus the stability of test processes and the credibility of test results are improved.

Exemplarily, high-precision angle measuring components, such as optical encoders or rotation sensors, are installed on the linkage mechanism of the five-link fatigue testing device, and these components are typically installed on a fixed point of the five-link to capture an oscillation angle of the linkage mechanism in real time. As a test proceeds, the angle measuring component collects data at a preset high sampling rate, where the data reflects a real-time operating trajectory of a blade, including parameters such as displacements and rotation angles. The collected data are transmitted to the control system, where the control system stores data of target operating trajectories in advance, and these target trajectories are set based on design specifications and testing requirements of blades. Through a special comparison algorithm, the system compares the real-time operating trajectory data with the target operating trajectory data point by point and calculates deviation values. For example, indicators such as root mean square deviation or maximum deviation are used to quantify the difference between them. If the deviation values are within a set tolerance range, it is considered as normal operations; otherwise, the subsequent adjustment step is triggered.

Step S200: in the case that the real-time operating trajectory does not match the target operating trajectory, adjusting the output torque according to the real-time operating trajectory.

Understandably, in actual operation, the real-time operating trajectory of wind turbine blades may deviate from the target operating trajectory due to various interference factors (such as slight deformation of a mechanical structure and fluctuation of motor performance). Therefore, step S200 is performed, and it can avoid problems such as distortion of test results and even damage to blades or a testing device due to continuous accumulation of trajectory deviation, so that the operating trajectory of the blade can return to the target operating trajectory by adjusting the motor output torque in real time, ensuring the accuracy of test processes and the safety of the device, and improving the consistency and reliability of test results.

Exemplarily, for a 1:1 biaxial test, the blade trajectory forms an ellipse. By real-time monitoring of the major and minor axis lengths of the ellipse of the operating trajectory and comparing them with the major and minor axis lengths of the target ellipse of the target operating trajectory, if a 20% shortfall in the major axis length of the ellipse is detected, the torque of the excitation force corresponding to the major axis can be adjusted by increasing the output torque of the motor drive (e.g., increasing by 20%) to implement the target operating trajectory.

In this embodiment, the real-time monitoring and feedback control with the angle measuring component are adopted, so that problems such as the accumulated deviation of the blade operating trajectory, inaccurate test results and the potential damage of the device caused by lack of real-time monitoring and adjustment are avoided, thereby implementing the dynamic monitoring and precise regulation of blade movements, ensuring the stability and reliability of test processes, and improving the accuracy of the test results and the safety of the device.

It should be noted that the above examples are only for understanding the present application, and do not constitute a limitation on the fatigue testing method for a wind turbine blade in the present application. Simple transformations, which are made in more ways based on this technical concept, are all within the protection scope of the present application.

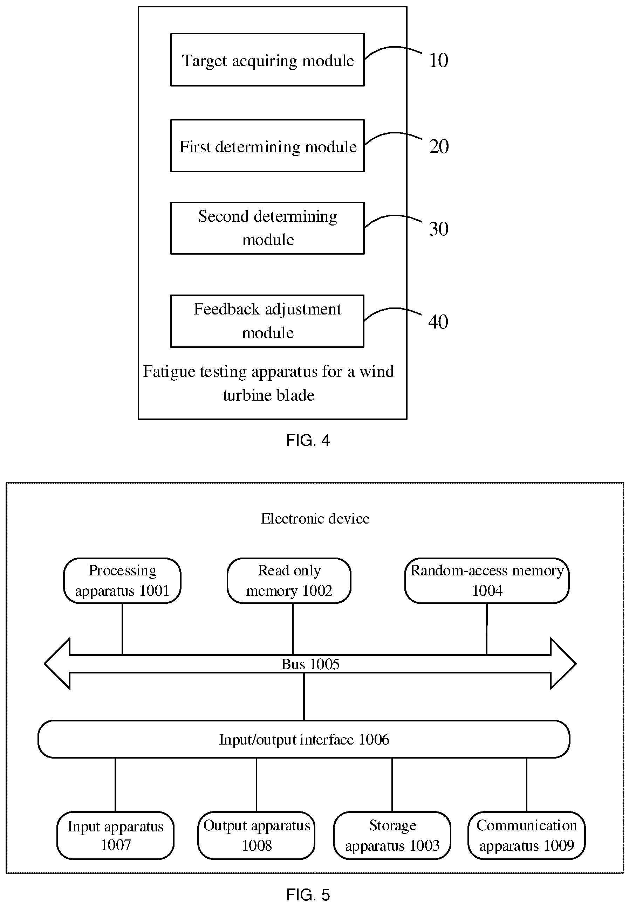

The present application also provides a fatigue testing apparatus for a wind turbine blade, please refer to FIG. 4, the fatigue testing apparatus for a wind turbine blade is applied to a fatigue testing device for a wind turbine blade, and the fatigue testing device for a wind turbine blade includes a linkage mechanism and a drive motor connected with one end of the linkage mechanism, and the other end of the linkage mechanism is connected with a wind turbine blade under test. The fatigue testing apparatus for a wind turbine blade includes:
a target acquiring module 10, configured to acquire a target operating trajectory of the wind turbine blade under test;
a first determining module 20, configured to determine an excitation force at a joint of the linkage mechanism and the wind turbine blade under test according to the target operating trajectory;
a second determining module 30, configured to determine an output torque of the drive motor according to the excitation force, and control the drive motor to execute the output torque, so as to drive the linkage mechanism to oscillate the wind turbine blade under test according to the target operating trajectory.

Optionally, the other end of the linkage mechanism is connected with a blade clamp through a bearing, and the blade clamp is configured to clamp the wind turbine blade under test, the target operating trajectory includes a displacement and a rotation angle of the wind turbine blade under test, and the excitation force includes a horizontal component and a vertical component.

The first determining module 20 is further configured to:
determine the horizontal component and the vertical component at the joint of the linkage mechanism and the blade clamp according to the displacement, the rotation angle and a preset first relation matrix, where the first relation matrix is configured to establish arithmetic relations between the displacement and the rotation angle, and the horizontal component and the vertical component.

Optionally, the first determining module 20 is further configured to:
acquire an elastic modulus of the wind turbine blade under test, and a section moment of inertia, a section area and a section location of the wind turbine blade under test at a section, where the section is located at a location where the wind turbine blade under test is clamped by the blade clamp, and the section location is a length from the section to a fixed location of the wind turbine blade under test;
construct the first relation matrix according to the elastic modulus, the section moment of inertia, the section area and the section location.

Optionally, the excitation force includes a horizontal component and a vertical component, the drive motor includes a first drive motor and a second drive motor, and the output torque includes a first output torque of the first drive motor and a second output torque of the second drive motor, and the second determining module 30 is further configured to:
determine the first output torque and the second output torque according to the horizontal component, the vertical component and a preset second relation matrix, where the second relation matrix is configured to establish arithmetic relations between the horizontal component and the vertical component, and the first output torque and the second output torque.

Optionally, the linkage mechanism includes a first excitation rocker arm, a second excitation rocker arm, a first transmission rod and a second transmission rod, where one end of the first excitation rocker arm is connected with the first drive motor, the other end of the first excitation rocker arm is connected with a blade clamp through a bearing, the blade clamp is configured to clamp the wind turbine blade under test, one end of the second excitation rocker arm is connected with the second drive motor, and the other end of the second excitation rocker arm is connected with the blade clamp through a bearing.

The second determining module 30 is further configured to:
acquire a first length, a second length, a third length, a fourth length, a fifth length, a first included angle and a second included angle, where the first length is a distance from a joint of the first drive motor and the first excitation rocker arm to a joint of the first excitation rocker arm and the first transmission rod; the second length is a distance from the joint of the first excitation rocker arm and the first transmission rod to the bottom of the blade clamp; the third length is a distance from a joint of the second excitation rocker arm and the second transmission rod to the bottom of the blade clamp; the fourth length is a distance from a joint of the second drive motor and the second excitation rocker arm to the joint of the second excitation rocker arm and the second transmission rod; the five length is a distance from the joint of the first drive motor and the first excitation rocker arm to the joint of the second excitation rocker arm and the second transmission rod; the first included angle is an included angle between the first excitation rocker arm and a preset horizontal direction; the second included angle is an included angle between the second excitation rocker arm and the horizontal direction;
construct the second relation matrix according to the first length, the second length, the third length, the fourth length, the fifth length, the first included angle and the second included angle.

Optionally, the second determining module 30 is further configured to:
construct a first function and a second function according to the first length, the second length, the third length, the fourth length, the fifth length, the first included angle and the second included angle, respectively;
compute complete differentials of the first function and the second function respectively to obtain respective differential elements, and construct a candidate relation matrix based on the respective differential elements.
transpose the candidate relation matrix to obtain a second relation matrix.

Optionally, the linkage mechanism is equipped with an angle measuring component, and the fatigue testing apparatus for a wind turbine blade further includes a feedback adjustment module 40, where the feedback adjustment module 40 is configured to:
monitor a real-time operating trajectory of the wind turbine blade under test according to the angle measuring component, and compare the real-time operating trajectory with the target operating trajectory;
in the case that the real-time operating trajectory does not match the target operating trajectory, adjust the output torque according to the real-time operating trajectory.

The fatigue testing apparatus for a wind turbine blade provided by the present application can solve the technical problem of how to improve the efficiency of the five-link fatigue testing device in blade fatigue testing by adopting the fatigue testing method for a wind turbine blade in the above embodiments. Compared with the prior art, the fatigue testing apparatus for a wind turbine blade provided by the present application has the same beneficial effects as those of the fatigue testing method for a wind turbine blade provided by the above embodiments, and other technical features of the fatigue testing apparatus for a wind turbine blade are the same as those disclosed in the methods of the above embodiments, which are not repeated here.

The present application provides an electronic device, where the electronic device includes at least one processor; and a memory connected with the at least one processor in a communication way. The memory stores instructions executable by the at least one processor, and the instructions are executed by the at least one processor to enable the at least one processor to execute the fatigue testing method for a wind turbine blade in the Embodiment 1.

With reference to FIG. 5, which shows a schematic structural diagram of an electronic device suitable for implementing an embodiment of the present application. The electronic device in an embodiment of the present application may include, but is not limited to, a mobile terminal such as a mobile phone, a notebook computer, a digital broadcast receiver, a personal digital assistant (PDA), a portable application description (PAD), a portable media player (PMP), a vehicle-mounted terminal (for example, a vehicle navigation terminal), and a fixed terminal such as a digital TV and a desktop computer. The electronic device shown in FIG. 5 is only an example, and should not bring any limitation to the function and application scope of the embodiments of the present application.

As shown in FIG. 5, the electronic device may include a processing apparatus 1001 (such as a central processing unit, a graphics processor, etc.), which may perform various appropriate actions and processes according to a program stored in a read only memory 1002 or a program loaded from a storage apparatus 1003 into a random-access memory 1004. In the random-access memory 1004, various programs and data required for the operation of the electronic device are also stored. The processing apparatus 1001, the read only memory 1002 and the random-access memory 1004 are connected with each other through a bus 1005. An input/output interface 1006 is also connected with the bus. Generally, the following systems can be connected with the input/output interface 1006, including: for example, an input apparatus 1007 of a touch screen, a touch pad, a keyboard, a mouse, an image sensor, a microphone, an accelerometer, a gyroscope, etc.; an output apparatus 1008 of a liquid crystal display (LCD), a speaker, a vibrator, etc.; a storage apparatus 1003 such as a magnetic tape, a hard disk; and a communication apparatus 1009. The communication apparatus 1009 may allow the electronic device to communicate wirelessly or wired with other device for exchanging data. Although the electronic device with various systems is shown in the drawing, it should be understood that not all the systems shown are required to be implemented or included. More or fewer systems may alternatively be implemented or included.

In particular, according to an embodiment disclosed in the present application, the process described above with reference to the flowchart can be implemented as a computer software program. For example, an embodiment disclosed in the present application include a computer program product, which includes a computer program carried on a computer-readable medium, and the computer program contains program codes for executing the method shown in the flowchart. In such embodiment, the computer program can be downloaded from the network through a communication apparatus and installed, or installed from the storage apparatus 1003, or installed from the read only memory 1002. When the computer program is executed by the processing apparatus 1001, the above functions defined in the method of the embodiments disclosed in the present application are executed.

The electronic device provided by the present application can solve the technical problem of how to improve the efficiency of the five-link fatigue testing device in blade fatigue testing by adopting the fatigue testing method for a wind turbine blade in the above embodiments. Compared with the prior art, the electronic device provided by the present application has the same beneficial effects as those of the fatigue testing method for a wind turbine blade provided by the above embodiments, and other technical features of the electronic device are the same as those disclosed in the methods of the above embodiments, which are not repeated here.

It should be understood that various parts disclosed in the present application can be implemented in hardware, software, firmware or a combination thereof. In the description of the above implementations, specific features, structures, materials or characteristics can be combined in any one or more embodiments or examples in a suitable way.

The above are only specific implementations of the present application, but the protection scope of the present application is not limited to thereto. Any person familiar with this technical field can easily think of changes or substitutions within the technical scope disclosed in the present application, which should be covered by the present application. Therefore, the protection scope of the present application should be subject to the protection scope of the claims.

The present application provides a computer-readable storage medium with computer-readable program instructions (i.e., computer program(s)) stored thereon, and the computer-readable program instructions are configured to execute the fatigue testing method for a wind turbine blade in the above embodiments.

The computer-readable storage medium provided by the present application can be, for example, a U disk, but is not limited to electric, magnetic, optical, electromagnetic, infrared, or semiconductor systems or equipment, or any combination of the above. More specific examples of the computer-readable storage medium may include, but are not limited to, electrical connections with one or more wires, portable computer magnetic disks, hard disks, a random-access memory (RAM), a read only memory (ROM), an erasable programmable read only memory (EPROM or a flash memory), optical fibers, a portable compact disk read only memory (CD-Read Only Memory, CD-ROM), optical storage devices, magnetic storage devices, or any suitable combination of the above. In this embodiment, the computer-readable storage medium can be any tangible medium containing or storing a program, where the program can be used by or in combination with an instruction execution system or equipment. The program code contained in the computer-readable storage medium can be transmitted by any suitable medium, including but not limited to: wires, optical cables, a radio frequency (RF), etc., or any suitable combination of the above.

The computer-readable storage medium may be included in an electronic device; and it can also exist alone without being assembled into the electronic device.

The computer-readable storage medium carries one or more programs which, when executed by the electronic device, cause the electronic device to: acquire a target operating trajectory of a wind turbine blade under test; determine an excitation force at a joint of a linkage mechanism in a fatigue testing device for a wind turbine blade and the wind turbine blade under test according to the target operating trajectory; and determine an output torque of a drive motor in the fatigue testing device for a wind turbine blade according to the excitation force, and control the drive motor to execute the output torque, so as to drive the linkage mechanism to oscillate the wind turbine blade under test according to the target operating trajectory.

Computer program codes for performing the operations of the present application can be written in one or more programming languages or their combinations, where the programming languages include object-oriented programming languages, such as Java, Smalltalk, C++, and conventional procedural programming languages, such as "C" or similar programming languages. The program code can be completely executed on a user's computer, partially executed on a user's computer, executed as an independent software package, partially executed on a user's computer and partially executed on a remote computer, or completely executed on a remote computer or a server. In a case involving a remote computer, the remote computer can be connected with a user computer through any kind of network, including a local area network (LAN) or a wide area network (WAN), or can be connected with an external computer (for example, through the Internet using an Internet service provider).

The flowcharts and block diagrams in the drawings illustrate the architecture, functions and operations possibly implemented by systems, methods and computer program products according to various embodiments of the present application. In this regard, each block in the flowcharts or block diagrams may represent a module, a program segment, or a part of codes that contain one or more executable instructions for implementing specified logical functions. It should also be noted that in some alternative implementations, the functions noted in the blocks may occur in a different order than those noted in the drawings. For example, two blocks shown in succession may actually be executed substantially in parallel, and they may sometimes be executed in the reverse order, depending on the functions involved. It should also be noted that each block in the block diagrams and/or the flowcharts, and combinations of blocks in the block diagrams and/or the flowcharts, can be implemented by a dedicated hardware-based system that performs specified functions or operations, or by a combination of dedicated hardware and computer instructions.

The modules described in the embodiments of the present application can be implemented by software or hardware, where the names of the modules do not constitute the limitation on the unit itself in some cases.

The readable storage medium provided by the present application is a computer-readable storage medium, and the computer-readable storage medium stores computer-readable program instructions (i.e., computer program(s)) for executing the fatigue testing method for a wind turbine blade, which can solve the technical problem of how to improve the efficiency of the five-link fatigue testing device in blade fatigue testing. Compared with the prior art, the computer-readable storage medium provided by the present application has the same beneficial effects as those of the fatigue testing method for a wind turbine blade provided by the above embodiments, which are not repeated here.

The present application also provides a computer program product, including a computer program which, when executed by a processor, implements the steps of the fatigue testing method for a wind turbine blade as described above.

The computer program product provided by the present application can solve the technical problem of how to improve the efficiency of the five-link fatigue testing device in blade fatigue testing. Compared with the prior art, the computer program product provided by the present application has the same beneficial effects as those of the fatigue testing method for a wind turbine blade provided by the above embodiments, which are not repeated here.

The above are only partial embodiments of the present application and do not limit the patent scope of the present application. Any equivalent structural transformation made using the technical concept of the present application and the contents of the specification and the drawings of the present application, which can be also directly/indirectly applied in other related technical fields, are included in the patent protection scope of the present application.

## Claims

1. A fatigue testing method for a wind turbine blade, applied to a fatigue testing device for a wind turbine blade, wherein the fatigue testing device for a wind turbine blade comprises a linkage mechanism and a drive motor connected with one end of the linkage mechanism, the other end of the linkage mechanism is connected with a wind turbine blade under test, and the fatigue testing method for a wind turbine blade comprises:
acquiring (S10) a target operating trajectory of the wind turbine blade under test;
determining (S20) an excitation force at a joint of the linkage mechanism and the wind turbine blade under test according to the target operating trajectory;
determining (S30) an output torque of the drive motor according to the excitation force, and controlling the drive motor to execute the output torque, so as to drive the linkage mechanism to oscillate the wind turbine blade under test according to the target operating trajectory.

2. The fatigue testing method for a wind turbine blade according to claim 1, wherein the other end of the linkage mechanism is connected with a blade clamp through a bearing, and the blade clamp is used to clamp the wind turbine blade under test; the target operating trajectory comprises a displacement and a rotation angle of the wind turbine blade under test, and the excitation force comprises a horizontal component and a vertical component;
the step of determining (S20) the excitation force at the joint of the linkage mechanism and the wind turbine blade under test according to the target operating trajectory comprises:
determining the horizontal component and the vertical component at the joint of the linkage mechanism and the blade clamp according to the displacement, the rotation angle and a preset first relation matrix, wherein the first relation matrix is used to establish arithmetic relations between the displacement and the rotation angle, and the horizontal component and the vertical component.

3. The fatigue testing method for a wind turbine blade according to claim 2, wherein before the step of determining the horizontal component and the vertical component at the joint of the linkage mechanism and the blade clamp according to the displacement, the rotation angle and the preset first relation matrix, the method further comprises:
acquiring an elastic modulus of the wind turbine blade under test, and a section moment of inertia, a section area and a section location of the wind turbine blade under test at a section, wherein the section is located at a location where the wind turbine blade under test is clamped by the blade clamp, and the section location is a length from the section to a fixed location of the wind turbine blade under test;
constructing the first relation matrix according to the elastic modulus, the section moment of inertia, the section area and the section location.

4. The fatigue testing method for a wind turbine blade according to claim 1, wherein the excitation force comprises a horizontal component and a vertical component, the drive motor comprises a first drive motor and a second drive motor, and the output torque comprises a first output torque of the first drive motor and a second output torque of the second drive motor, and the step of determining (S30) the output torque of the drive motor according to the excitation force comprises:
determining the first output torque and the second output torque according to the horizontal component, the vertical component and a preset second relation matrix, wherein the second relation matrix is used to establish arithmetic relations between the horizontal component and the vertical component, and the first output torque and the second output torque.

5. The fatigue testing method for a wind turbine blade according to claim 4, wherein the linkage mechanism comprises a first excitation rocker arm, a second excitation rocker arm, a first transmission rod and a second transmission rod, wherein one end of the first excitation rocker arm is connected with the first drive motor, and the other end of the first excitation rocker arm is connected with a blade clamp through a bearing, and the blade clamp is used to clamp the wind turbine blade under test, one end of the second excitation rocker arm is connected with the second drive motor, and the other end of the second excitation rocker arm is connected with the blade clamp through a bearing;
before the step of determining the first output torque and the second output torque according to the horizontal component, the vertical component and the preset second relation matrix, the method further comprises:
acquiring a first length, a second length, a third length, a fourth length, a fifth length, a first included angle and a second included angle, wherein the first length is a distance from a joint of the first drive motor and the first excitation rocker arm to a joint of the first excitation rocker arm and the first transmission rod; the second length is a distance from the joint of the first excitation rocker arm and the first transmission rod to the bottom of the blade clamp; the third length is a distance from a joint of the second excitation rocker arm and the second transmission rod to the bottom of the blade clamp; the fourth length is a distance from a joint of the second drive motor and the second excitation rocker arm to the joint of the second excitation rocker arm and the second transmission rod; the five length is a distance from the joint of the first drive motor and the first excitation rocker arm to the joint of the second excitation rocker arm and the second transmission rod; the first included angle is an included angle between the first excitation rocker arm and a preset horizontal direction; the second included angle is an included angle between the second excitation rocker arm and the horizontal direction;
constructing the second relation matrix according to the first length, the second length, the third length, the fourth length, the fifth length, the first included angle and the second included angle.

6. The fatigue testing method for a wind turbine blade according to claim 5, wherein the step of constructing the second relation matrix according to the first length, the second length, the third length, the fourth length, the fifth length, the first included angle and the second included angle comprises:
constructing a first function and a second function according to the first length, the second length, the third length, the fourth length, the fifth length, the first included angle and the second included angle, respectively;
computing complete differentials of the first function and the second function respectively to obtain respective differential elements, and constructing a candidate relation matrix based on the respective differential elements;
transposing the candidate relation matrix to obtain the second relation matrix.

7. The fatigue testing method for a wind turbine blade according to claim 1, wherein the linkage mechanism is equipped with an angle measuring component, and after the step of controlling (S30) the drive motor to execute the output torque, so as to drive the linkage mechanism to oscillate the wind turbine blade under test according to the target operating trajectory, the method further comprises:
monitoring (S100) a real-time operating trajectory of the wind turbine blade under test according to the angle measuring component, and comparing the real-time operating trajectory with the target operating trajectory;
in the case that the real-time operating trajectory does not match the target operating trajectory, adjusting (S200) the output torque according to the real-time operating trajectory.

8. A fatigue testing apparatus for a wind turbine blade, applied to a fatigue testing device for a wind turbine blade, wherein the fatigue testing device for a wind turbine blade comprises a linkage mechanism and a drive motor connected with one end of the linkage mechanism, the other end of the linkage mechanism is connected with a wind turbine blade under test, and the fatigue testing apparatus for a wind turbine blade comprises:
a target acquiring module (10), configured to acquire a target operating trajectory of the wind turbine blade under test;
a first determining module (20), configured to determine an excitation force at a joint of the linkage mechanism and the wind turbine blade under test according to the target operating trajectory;
a second determining module (30), configured to determine an output torque of the drive motor according to the excitation force, and control the drive motor to execute the output torque, so as to drive the linkage mechanism to oscillate the wind turbine blade under test according to the target operating trajectory.

9. An electronic device, comprising: a memory, a processor and a computer program stored in the memory and run in the processor, wherein the computer program is configured to implement steps of the fatigue testing method for a wind turbine blade according to any one of claims 1 to 7.

10. A computer-readable storage medium, wherein the storage medium stores a computer program which, when executed by a processor, implements steps of the fatigue testing method for a wind turbine blade according to any one of claims 1 to 7.

11. A computer program product, wherein the computer program product comprises a computer program which, when executed by a processor, implements steps of the fatigue testing method for a wind turbine blade according to any one of claims 1 to 7.
